# EUROPEAN PATENT APPLICATION

(11) **EP 3 984 668 A1**
(43) Date of publication of application: **20.04.2022**
(21) Application number: 21197456.3
(22) Date of filing: 17.09.2021
(51) Int. Cl.: B22F 10/28, B08B 3/02, B08B 3/04, B08B 5/02, B22F 10/31, B22F 12/44, B23K 26/082, B23K 26/342, B23K 26/70, B29C 64/153, B29C 64/264, B29C 64/277, B29C 64/35, B33Y 40/00, B33Y 50/02, G01N 21/15, G02B 27/00

(54) **SYSTEMS AND METHODS FOR HANDLING OPTICAL ANOMALIES ON OPTICAL ELEMENTS OF AN ADDITIVE MANUFACTURING MACHINE**

(30) Priority: 14.10.2020 US 202017070403
(71) Applicant: Concept Laser GmbH, 96215 Lichtenfels (DE); General Electric Company, Schenectady, NY 12345 (US)
(72) Inventor: Mamrak, Justin, Schenectady, 12345 (US); Redding, MacKenzie Ryan, Schenectady, 12345 (US); Gaerber, Bertram, 96215 Lichtenfels (DE)
(74) Representative: Hafner & Kohl PartmbB

(57) **Abstract**

A method of operating an additive manufacturing machine may include determining an operational state and/or a remedial event for the machine based on optical anomalies on one or more optical elements of an energy beam system determined by image data from a light sensor that detects a reflected portion of an imaging beam reflected by the optical elements. The remedial event may include a maintenance event and/or a replacement event. An object may be additively manufactured using nominal operating conditions during a nominal operational state, and/or using one or more augmented operating conditions during an augmented operational state. A maintenance operation may be performed, such as cleaning and/or calibrating the one or more optical elements and/or one or more components of the energy beam system, upon having determined the remedial event that comprises the maintenance event. A replacement operation may be performed, such as replacing the one or more optical elements, upon having determined the remedial event that comprises the replacement event.

## Description

### FIELD

The present disclosure generally pertains to additive manufacturing systems, and more particularly to additive manufacturing systems configured to form three-dimensional objects by irradiating an additive manufacturing material using an energy beam.

### BACKGROUND

Additive manufacturing machines may utilize energy beams from an energy beam system to additively manufacture three-dimensional objects. Optical elements along a beam path of an energy beam may possess optical anomalies, such as contaminants and/or damage. These optical anomalies may impact characteristics of the irradiation form the energy beams used to additively manufacture three-dimensional objects.

Accordingly, there exists a need for improved systems and methods of handling optical anomalies on optical elements of an additive manufacturing machine.

### BRIEF DESCRIPTION

Aspects and advantages will be set forth in part in the following description, or may be apparent from the description, or may be learned through practicing the presently disclosed subject matter.

In one aspect, the present disclosure embraces methods of operating an additive manufacturing machine. An exemplary method may include determining an operational state and/or a remedial event for an additive manufacturing machine. The operational state and/or the remedial event may be determined based at least in part on one or more optical anomalies having been determined upon one or more optical elements. The one or more optical anomalies may be determined based at least in part on image data from a light sensor. The one or more optical elements may be utilized by, and/or may define a portion of, an energy beam system configured to emit one or more energy beams to additively manufacture a three-dimensional object. The light sensor may detect a reflected portion of an imaging beam emitted by a light source. The reflected portion may be reflected by the one or more optical elements. The operational state may include a nominal operational state and/or an augmented operational state. The remedial event may include a maintenance event and/or a replacement event.

An exemplary method may include additively manufacturing the three-dimensional object at least in part using nominal operating conditions when the operational state comprises a nominal operational state. Additionally, or in the alternative, an exemplary method may include additively manufacturing the three-dimensional object at least in part using one or more augmented operating conditions when the operational state comprises an augmented operational state.

In some embodiments, an exemplary method may include performing a maintenance operation upon having determined the remedial event that comprises the maintenance event. The maintenance operation may include cleaning and/or calibrating the one or more optical elements and/or one or more components of the energy beam system. Additionally, or in the alternative, an exemplary method may include performing a replacement operation upon having determined the remedial event that comprises the replacement event. The replacement operation may include replacing the one or more optical elements.

In another aspect, the present disclosure embraces additive manufacturing systems. An exemplary additive manufacturing system may include an additive manufacturing machine that has an energy beam system configured to emit one or more energy beams to additively manufacture a three-dimensional object, and one or more optical elements utilized by, or defining a portion of, the energy beam system. An exemplary additive manufacturing system may include a control system communicatively coupled with, or defining a portion of, the additive manufacturing machine. The control system may be configured to perform a method in accordance with the present disclosure.

In yet another aspect, the present disclosure embraces computer-readable media. Exemplary computer-readable media may include instructions, which when executed by a processor associated with an additive manufacturing system, causes the additive manufacturing system to perform a method in accordance with the present disclosure.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIG. 1 schematically depicts an exemplary additive manufacturing system;
FIGs. 2A-2F, respectively, schematically depicts a cross-sectional view of an exemplary optical assembly maintenance system;
FIG. 3A schematically depicts a cross-sectional view of an exemplary optical element;
FIG. 3B schematically depicts a facing view of an exemplary optical element;
FIG. 4 schematically depicts an exemplary control system configured to maintain an optical assembly in connection with, and/or that may be included as part of, an optical assembly maintenance system;
FIG. 5A schematically depicts an exemplary accumulation of contaminants on optical elements of an optical assembly;
FIG. 5B schematically depicts exemplary optical element contaminants mapped to a build plane corresponding, by way of example, to the contaminants on the optical elements of the optical assembly shown in FIG. 6A;
FIG. 6 schematically depicts an exemplary maintenance system;
FIG. 7 schematically depicts an exemplary control system; and
FIG. 8 shows a flow chart depicting an exemplary method of maintaining an optical assembly.
Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

The present disclosure generally provides systems and methods of handling optical anomalies on optical elements of an additive manufacturing machines or systems. As described herein, exemplary embodiments of the present subject matter involve the use of additive manufacturing machines or systems. As used herein, the term "additive manufacturing" refers generally to manufacturing technology in which components are manufactured in a layer-by-layer manner. An exemplary additive manufacturing machine may be configured to utilize any desired additive manufacturing technology. In an exemplary embodiment, the additive manufacturing machine may utilize an additive manufacturing technology that includes a powder bed fusion (PBF) technology, such as a direct metal laser melting (DMLM) technology, an electron beam melting (EBM) technology, an electron beam sintering (EBS) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature, and may have a variety of integral sub-components.

Additionally or alternatively suitable additive manufacturing technologies include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Vat Polymerization (VP) technology, Sterolithography (SLA) technology, and other additive manufacturing technology that utilizes an energy beam.

Additive manufacturing technology may generally be described as enabling fabrication of complex objects by building objects point-by-point, layer-by-layer, typically in a vertical direction; however, other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, concrete, or any other suitable material that may be in solid, liquid, powder, sheet material, wire, or any other suitable form. Each successive layer may be, for example, between about 10 µm and 200 µm, although the thickness may be determined based on any number of parameters and may be any suitable size according to alternative embodiments.

As used herein, the term "build plane" refers to a plane defined by a surface upon which an energy beam impinges during an additive manufacturing process. Generally, the surface of a powder bed defines the build plane; however, during irradiation of a respective layer of the powder bed, a previously irradiated portion of the respective layer may define a portion of the build plane, and/or prior to distributing powder material across a build module, a build plate that supports the powder bed generally defines the build plane.

It is understood that terms "upstream" and "downstream" refer to the relative direction with respect to fluid flow in a fluid pathway. For example, "upstream" refers to the direction from which the fluid flows, and "downstream" refers to the direction to which the fluid flows. It is also understood that terms such as "top", "bottom", "outward", "inward", and the like are words of convenience and are not to be construed as limiting terms. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

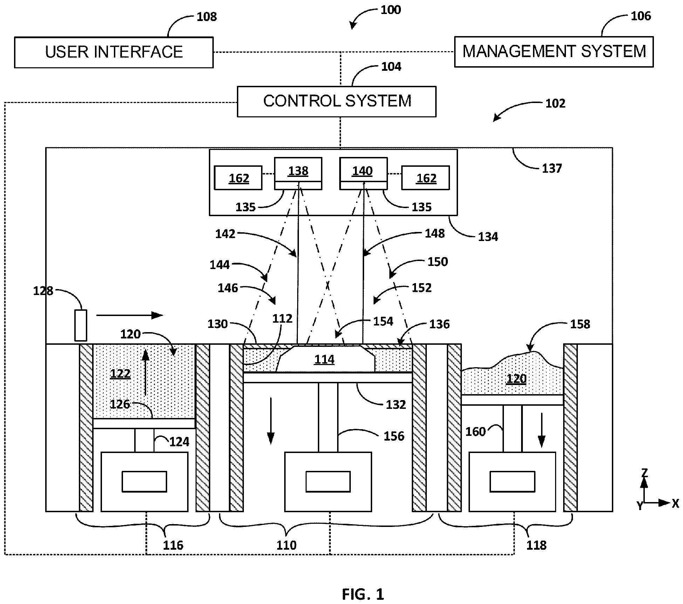

Exemplary embodiments of the present disclosure will now be described in further detail. FIG. 1 schematically depicts an exemplary additive manufacturing system 100. The additive manufacturing system 100 may include one or more additive manufacturing machines 102. The one or more additive manufacturing machines 102 may include a control system 104. The control system 104 may be included as part of the additive manufacturing machine 102 or the control system 104 may be associated with the additive manufacturing machine 102. The control system 104 may include componentry integrated as part of the additive manufacturing machine 102 and/or componentry that is provided separately from the additive manufacturing machine 102. Various componentry of the control system 104 may be communicatively coupled to various componentry of the additive manufacturing machine 102.

The control system 104 may be communicatively coupled with a management system 106 and/or a user interface 108. The management system 106 may be configured to interact with the control system 104 in connection with enterprise-level operations pertaining to the additive manufacturing system 100. Such enterprise level operations may include transmitting data from the management system 106 to the control system 104 and/or transmitting data from the control system 104 to the management system 106. The user interface 108 may include one or more user input/output devices to allow a user to interact with the additive manufacturing system 100.

As shown, an additive manufacturing machine 102 may include a build module 110 that includes a build chamber 112 within which an object or objects 114 may be additively manufactured. In some embodiments, an additive manufacturing machine 102 may include a powder module 116 and/or an overflow module 118. The build module 110, the powder module 116, and/or the overflow module 118 may be provided in the form of modular containers configured to be installed into and removed from the additive manufacturing machine 102 such as in an assembly-line process. Additionally, or in the alternative, the build module 110, the powder module 116, and/or the overflow module 118 may define a fixed componentry of the additive manufacturing machine 102.

The powder module 116 contains a supply of powder material 120 housed within a supply chamber 122. The powder module 116 includes a powder piston 124 that elevates a powder floor 126 during operation of the additive manufacturing machine 102. As the powder floor 126 elevates, a portion of the powder material 120 is forced out of the powder module 116. A recoater 128 such as a blade or roller sequentially distributes thin layers of powder material 120 across a build plane 130 above the build module 110. A build platform 132 supports the sequential layers of powder material 120 distributed across the build plane 130. In some embodiments, a build platform 132 may include a build plate (not shown) secured thereto and upon which an object 114 may be additively manufactured.

The additive manufacturing machine 102 includes an energy beam system 134 configured to generate a plurality of energy beams such as laser beams or electron beams, and to direct the respective energy beams onto the build plane 130 to selectively solidify respective portions of the powder bed 136 defining the build plane 130. As the respective energy beams selectively melt or fuse the sequential layers of powder material 120 that define the powder bed 136, the object 114 begins to take shape. Typically with a DMLM, EBM, or SLM system, the powder material 120 is fully melted, with respective layers being melted or re-melted with respective passes of the energy beams. Conversely, with DMLS or SLS systems, typically the layers of powder material 120 are sintered, fusing particles of powder material 120 to one another generally without reaching the melting point of the powder material 120. The energy beam system 134 may include componentry integrated as part of the additive manufacturing machine 102 and/or componentry that is provided separately from the additive manufacturing machine 102.

The energy beam system 134 may include one or more irradiation devices configured to generate a plurality of energy beams and to direct the energy beams upon the build plane 130. The irradiation devices may respectively have an energy beam source, a galvo-scanner, and optical assembly 135 that includes a plurality of optical elements configured to direct the energy beam onto the build plane 130. The optical assembly 135 may include one or more optical elements, such as lenses through which an energy beam may be transmitted along an optical path from the energy beam source to the build plane. By way of example, an optical assembly 135 may include one more focusing lenses that focus an energy beam on a build plane 130. Additionally, or in the alternative, an optical assembly 135 may include a window or protective glass that separates one or more components of the energy beam system 134 from conditions existing within a process chamber 137 of an additive manufacturing machine 102. Such window or protective glass may prevent contaminants associated with the additive manufacturing process, such as powder material, dust, soot, residues from fumes or vapor, and the like, from coming into contact with sensitive components of an energy beam system 134. Accumulation of contaminants upon various optical elements of an optical assembly 135 may adversely affect operation of the energy beam system 134 and/or quality metrics associated with an energy beam system. Additionally, or in the alternative, such contaminants may cause damage to various optical elements of an optical assembly 135. The presently disclosed optical element monitoring systems may be configured to monitor various optical elements of an optical assembly 135 for accumulation of contaminants and/or damage. Additionally, or in the alternative, the presently disclosed optical element monitoring systems may be configured to initiate cleaning, maintenance, and/or replacement of various optical elements of an optical assembly 135.

For the embodiment shown in FIG. 1, the energy beam system 134 includes a first irradiation device 138 and a second irradiation device 140. The first irradiation device 138 may include a first optical assembly 135, and/or the second irradiation device 140 may include a second optical assembly 135. In other embodiments, an energy beam system 134 may include three, four, six, eight, ten, or more irradiation devices, and such irradiation devices may respectively include an optical assembly 135. Regardless of how many irradiation devices may be included in an energy beam system 134, one or more corresponding optical element monitoring systems may be provided to initiate cleaning, maintenance, and/or replacement of various optical elements of an optical assembly 135 associated with the energy beam system 134.

The plurality of irradiation devices 138, 140 may be configured to respectively generate one or more energy beams that are respectively scannable within a scan field incident upon at least a portion of the build plane 130. For example, the first irradiation device 138 may generate a first energy beam 142 that is scannable within a first scan field 144 incident upon at least a first build plane region 146. The second irradiation device 140 may generate a second energy beam 148 that is scannable within a second scan field 150 incident upon at least a second build plane region 152. The first scan field 144 and the second scan field 150 may overlap such that the first build plane region 146 scannable by the first energy beam 142 overlaps with the second build plane region 152 scannable by the second energy beam 148. The overlapping portion of the first build plane region 146 and the second build plane region 152 may sometimes be referred to as an interlace region 154. Portions of the powder bed 136 to be irradiated within the interlace region 154 may be irradiated by the first energy beam 142 and/or the second energy beam 148 in accordance with the present disclosure.

To irradiate a layer of the powder bed 136, the one or more irradiation devices (e.g., the first irradiation device 138 and the second irradiation device 140) respectively direct the plurality of energy beams (e.g., the first energy beam 142 and the second energy beam 148) across the respective portions of the build plane 130 (e.g., the first build plane region 146 and the second build plane region 152) to melt or fuse the portions of the powder material 120 that are to become part of the object 114. The first layer or series of layers of the powder bed 136 are typically melted or fused to the build platform 132, and then sequential layers of the powder bed 136 are melted or fused to one another to additively manufacture the object 114. As sequential layers of the powder bed 136 are melted or fused to one another, a build piston 156 gradually lowers the build platform 132 to make room for the recoater 128 to distribute sequential layers of powder material 120. The distribution of powder material 120 across the build plane 130 to form the sequential layers of the powder bed 136, and/or the irradiation imparted to the powder bed 136, may introduce contaminants, such as powder material, dust, soot, residues from fumes or vapor, and the like, into the environment of the process chamber 137. Such contaminants may accumulate on various optical elements of the optical assembly 135 associated with the energy beam system 134.

As the build piston 156 gradually lowers and sequential layers of powdered material 120 are applied across the build plane 130, the next sequential layer of power material 120 defines the surface of the powder bed 136 coinciding with the build plane 130. Sequential layers of the powder bed 136 may be selectively melted or fused until a completed object 114 has been additively manufactured. In some embodiments, an additive manufacturing machine may utilize an overflow module 118 to capture excess powder material 120 in an overflow chamber 158. The overflow module 118 may include an overflow piston 160 that gradually lowers to make room within the overflow chamber 158 for additional excess powder material 120.

It will be appreciated that in some embodiments an additive manufacturing machine may not utilize a powder module 116 and/or an overflow module 118, and that other systems may be provided for handling powder material 120, including different powder supply systems and/or excess powder recapture systems. However, the subject matter of the present disclosure may be practiced with any suitable additive manufacturing machine without departing from the scope hereof.

Still referring to FIG. 1, in some embodiments, an additive manufacturing machine 102 may include an imaging system 162. The imaging system 162 may be configured to detect a monitoring beam (not shown) such as an infrared beam from a laser diode and/or a reflected portion of an energy beam (e.g., a first energy beam 142 and/or a second energy beam 148).

An energy beam system 134 and/or an imaging system 162 may include one or more detection devices (not shown). The one or more detection devices may be configured to determine one or more parameters associated with irradiating the sequential layers of the powder bed 136 based at least in part on the detected monitoring beam. One or more parameters associated with irradiating the sequential layers of the powder bed 136 may include irradiation parameters and/or object parameters, such as melt pool monitoring parameters. The one or more parameters determined by the imaging system 162 may be utilized, for example, by the control system 104, to control one or more operations of the additive manufacturing machine 102 and/or of the additive manufacturing system 100. The one or more detection devices may be configured to obtain image data of the build plane 130 from a respective monitoring beam (not shown). An exemplary detection device may include a camera, an image sensor, a photo diode assembly, or the like. For example, a detection device may include charge-coupled device (e.g., a CCD sensor), an active-pixel sensor (e.g., a CMOS sensor), a quanta image device (e.g., a QIS sensor), or the like. A detection device may additionally include a lens assembly configured to focus an monitoring beam along a beam path to the detection device. An imaging system 162 may include one or more imaging optical elements (not shown), such as mirrors, beam splitters, lenses, and the like, configured to direct an monitoring beam to a corresponding detection device.

In addition or in the alternative to determining parameters associated with irradiation the sequential layers of the powder bed 136, the imaging system 162 may be configured to perform one or more calibration operations associated with an additive manufacturing machine 102, such as a calibration operation associated with the energy beam system 134, one or more irradiation devices 138, 140 or components thereof, and/or the imaging system 162 or components thereof.

The imaging system 162 may be configured to project a monitoring beam (not shown) and to detect a portion of the monitoring beam reflected from the build plane 130. Additionally, and/or in the alternative, the imaging system 162 may be configured to detect a monitoring beam that includes radiation emitted from the build plane 130, such as radiation from an energy beam 142, 148 reflected from the powder bed 136 and/or radiation emitted from a melt pool in the powder bed 136 generated by an energy beam 142, 148 and/or radiation emitted from a portion of the powder bed 136 adjacent to the melt pool.

The imaging system 162 may include componentry integrated as part of the additive manufacturing machine 102 and/or componentry that is provided separately from the additive manufacturing machine 102. For example, the imaging system 162 may include componentry integrated as part of the energy beam system 134. Additionally, or in the alternative, the imaging system 162 may include separate componentry, such as in the form of an assembly, that can be installed as part of the energy beam system 134 and/or as part of the additive manufacturing machine 102.

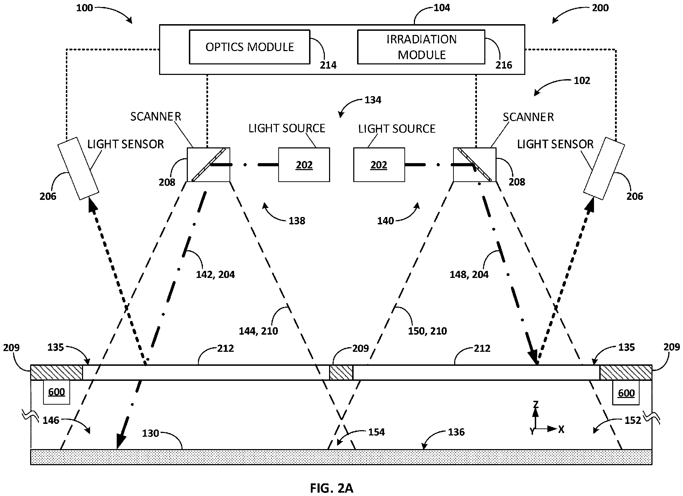

Now turning to FIGs. 2A through 2F, exemplary optical element monitoring systems 200 will be described. An optical element monitoring system 200 may be configured to detect optical anomalies, such as contamination and/or damage, that may be present upon any one or more optical elements of an energy beam system 134. An optical element monitoring system 200 may additionally or alternatively be configured to determine one or more operational states and/or one or more remedial events, for example, responsive at least in part to an optical anomaly having been detected and/or responsive to an absence of an optical anomaly. FIGs. 2A through 2E show exemplary embodiments of an optical element monitoring system 200. The embodiments shown are provided by way of example and not to be limiting. Other embodiments are also contemplated within the scope of the present disclosure.

As shown in FIGs. 2A through 2E, an optical element monitoring system 200 may include a light source 202 configured to generate an imaging beam 204, and a light sensor 206 configured to detect at least a portion of the imaging beam 204. An optical element monitoring system 200 may include a scanner 208 configured to scan the imaging beam 204 across a scan field 210. The respective components of the optical element monitoring system 200 may be supported by a frame 209. The frame 209 may define a portion of an additive manufacturing machine 102, and/or a portion of an energy beam system 134, and/or a portion of an imaging system 162. The various components that make up an optical element monitoring system 200 may be included as part of an energy beam system 134 and/or an imaging system 162. For example, one or more components of an energy beam system 134 and/or an imaging system 162 may be utilized for one or more operations of an optical element monitoring system 200. Additionally, or in the alternative, one or more components of an optical element monitoring system 200 may be provided as separate components.

The light source 202 may include any suitable light emitting device, such as one or more light emitting diodes (LED), an LED array, one or more laser diodes, a laser diode array, and so forth. The light source 202 may be configured to emit any suitable electromagnetic radiation, which may also be referred to as "light", including any wavelength or wavelength range, such as infrared light, visible light, and/or ultraviolet light. In some embodiments, an irradiation device 138, 140 may include, or may be utilized as, the light source 202 of an optical element monitoring system 200. The light sensor 206 may include any suitable sensor device, such as a camera, an image sensor, a photo diode assembly, or the like. For example, the light sensor 206 may include charge-coupled device (e.g., a CCD sensor), an active-pixel sensor (e.g., a CMOS sensor), a quanta image device (e.g., a QIS sensor), or the like. In some embodiments, a detection device (not shown) of an imaging system 162 may include, or may be utilized as, the light sensor 206 of an optical element monitoring system 200. Additionally, or in the alternative, the light sensor 206 of the optical element monitoring system 200 may include, or may be utilized as, a detection device of an imaging system 162. For example, the light sensor 206 may be configured for melt pool monitoring, such as a pyrometer or the like. The scanner 208 may include any suitable scanner device, such as a galvanometric scanner, an acousto-optic modulator, an electro-optic modulator, a phase array scanner, or the like. In some embodiments, the scanner 208 of the optical element monitoring system 200 may be utilized for scanning an energy beam 142, 148 from an irradiation device 138, 140 upon the build plane 130.

During operation of the optical element monitoring system 200, an imaging beam 204 may be incident upon one or more optical elements 212, such as lenses, windows, filters, apertures, mirrors, or the like, of an optical assembly 135. The one or more optical elements 212 may be supported by an optical assembly 135. The optical assembly 135 may include, and/or may be supported by, a frame 209. The frame 209 and/or the optical assembly 135 may define a portion of an additive manufacturing machine 102, and/or a portion of an energy beam system 134, and/or a portion of an imaging system 162. In some embodiments, the one or more optical elements 212 may include a window configured to separate components of an energy beam system 134 and/or an imaging system 162 from a process chamber 137 of an additive manufacturing machine 102. Additionally, or in the alternative, the one or optical elements 212 may include one or more lenses of an energy beam system 134 and/or an imaging system 162, such as one or more lenses configured to focus and/or direct an energy beam 142, 148 onto the build plane 130, and/or one or more lenses configured to focus and/or direct a monitoring beam (not shown) to a detection device of an imaging system 162.

At least a portion of the imaging beam 204 may be reflected by the one or more optical elements 212 of the optical assembly 135 and become incident upon the light sensor 206. Additionally, or in the alternative, at least a portion of the imaging beam 204 may be transmitted through the one or more optical elements 212 of the optical assembly 135 and become incident upon the light sensor 206. The scanner 208 may be configured to scan the imaging beam 204 across at least a portion of the scan field 210. The light sensor 206 may be configured to generate image data, and/or to provide a signal from which image data may be generated, representative of the portion of the imaging beam incident upon the light sensor 206. An image of one or more optical elements of the optical assembly may be generated from the image data. One or more optical anomalies may be determined from the image data and or the image of the one or more optical elements.

As shown in FIGs. 2A through 2F, in some embodiments, an optical element monitoring system 200 may include a plurality of light sources 202 and/or a plurality of corresponding light sensors 206. For example, in some embodiments, a first light source may be configured to scan a first imaging beam 204 with a first scanner 208 across a first scan field 144, 210 with respect to a first one or more optical elements 212. A first light sensor 206 may be configured and arranged to detect at least a portion of the first imaging beam 204 reflected and/or transmitted from the first one or more optical elements 212. The first one or more optical elements 212 may be associated with, and/or included as part of, a first irradiation device 138. For example, a first energy beam 142 from the first irradiation device 138 may pass through the first one or more optical elements 212 along an optical path between an energy beam source and a build plane 130. Additionally, or in the alternative, the first one or more optical elements may be associated with, and or included as part of, a first imaging system 162. For example, a first monitoring beam (not shown) may pass through the first one or more optical elements 212 along an optical path of the first imaging system 162.

Additionally, or in the alternative, in some embodiments a second light source may be configured to scan a second imaging beam 204 with a second scanner 208 across a second scan field 150, 210 with respect to a second one or more optical elements 212. A second light sensor 206 may be configured and arranged to detect at least a portion of the second imaging beam 204 reflected and/or transmitted from the second one or more optical elements 212. The second one or more optical elements 212 may be associated with, and/or included as part of, a second irradiation device 140. For example, a second energy beam 148 from the second irradiation device 140 may pass through the second one or more optical elements 212 along an optical path between an energy beam source and the build plane 130. Additionally, or in the alternative, the second one or more optical elements may be associated with, and or included as part of, a second imaging system 162. For example, a second monitoring beam (not shown) may pass through the second one or more optical elements 212 along an optical path of the second imaging system 162.

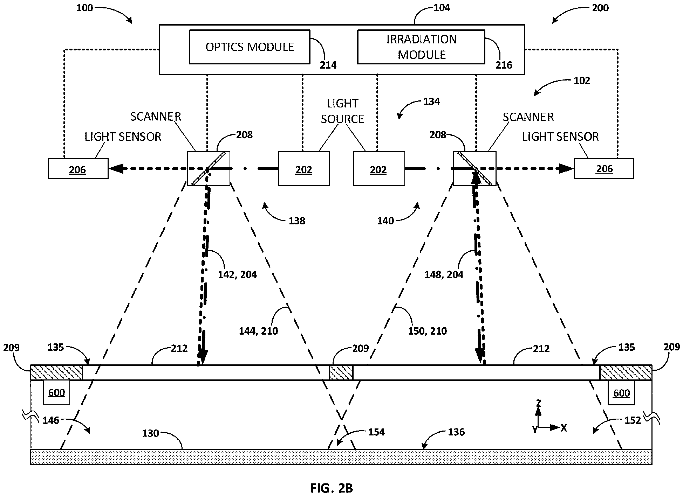

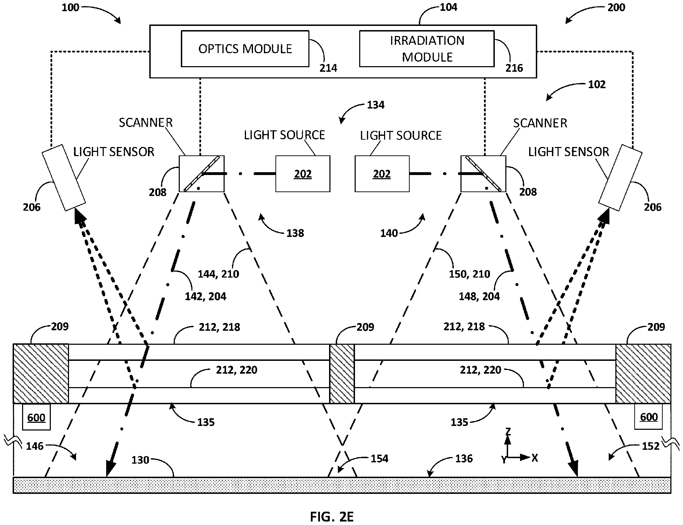

As shown in FIGs. 2A, 2B, and 2E, an optical element monitoring system 200 may include a light source 202 configured to scan an imaging beam 204 across the across a scan field 210 of one or more optical elements 212, and a light sensor 206 configured to detect at least a portion of the imaging beam 204 reflected by the one or more optical elements 212. As shown in FIGs. 2A and 2E, the light sensor 206 may be positioned off-axis relative to the optical path of the imaging beam 204 incident upon the one or more optical elements 212, such that the reflected portion of the imaging beam 204 follows an optical path that diverges from the optical path incident upon the one or more optical elements 212. Additionally, or in the alternative, as shown in FIG. 2B, the light sensor may be positioned on-axis relative to the optical path of the imaging beam 204 incident upon the one or more optical elements 212, such that the reflected portion of the imaging beam 204 follows an optical path that inversely parallels the optical path incident upon the one or more optical elements 212.

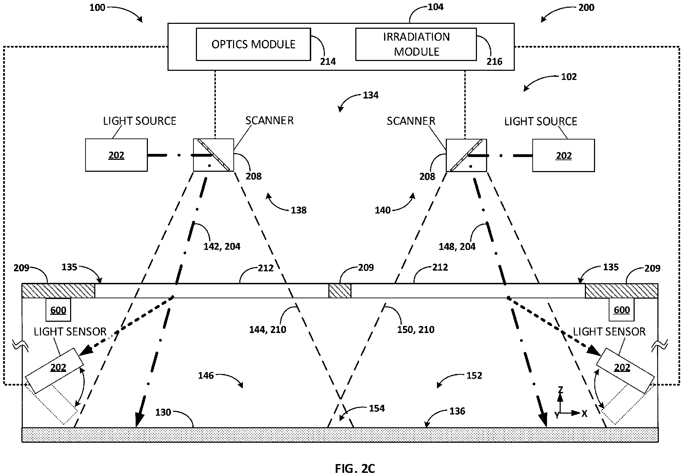

As shown in FIG. 2C, an optical element monitoring system 200 may include a light source 202 configured to scan an imaging beam 204 across the across a scan field 210 of one or more optical elements 212, and a light sensor 206 configured to detect at least a portion of the imaging beam 204 transmitted through and/or refracted by the one or more optical elements 212. The light source 202 may be positioned within the process chamber 137. In some embodiments, the light sensor 206 may be movably positioned within the process chamber 137. For example, the light sensor 206 may be positioned at least partially facing the one or more optical elements 212 for an optical element monitoring operation, and/or the light sensor 206 may be positioned at least partially facing the build plane 130 for an additive manufacturing operation, such as a melt pool monitoring operation.

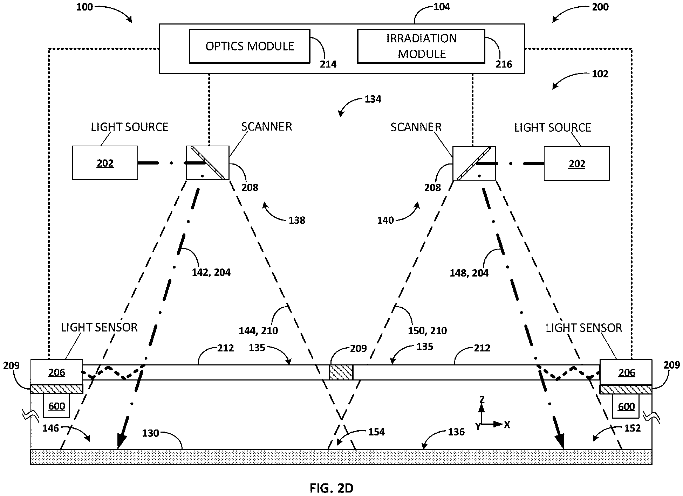

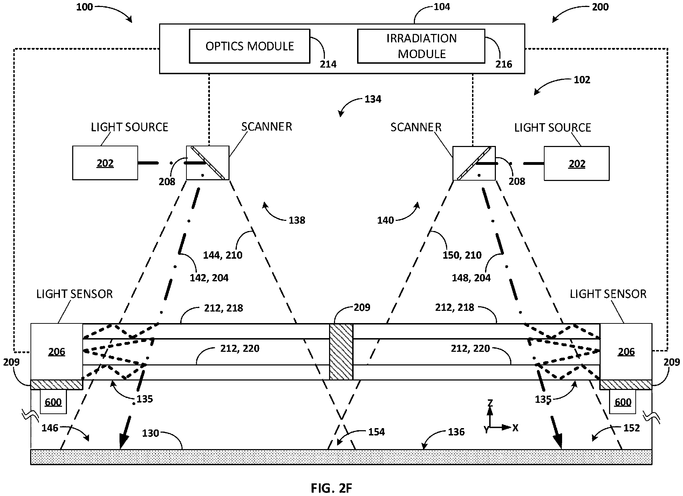

As shown in FIGs. 2D and 2F, an optical element monitoring system 200 may include a light source 202 configured to scan an imaging beam 204 across the across a scan field 210 of one or more optical elements 212, and a light sensor 206 configured to detect at least a portion of the imaging beam 204 internally reflected by the one or more optical elements 212. As shown in FIG. 2D, a light sensor 206 may be configured to detect at least a portion of the imaging beam 204 internally reflected within an optical element 212, such as by the internal boundaries of the optical element 212. As shown in FIG. 2D, a when an optical element monitoring system 200 includes a plurality of optical elements 212, a light sensor 206 configured to detect an internally reflected portion of an imaging beam 204 may detect a portion of an imaging beam reflected by the internal boundaries of an optical element 212 and/or between facing boundaries of adjacent optical elements 212.

As shown in FIGs. 2E and 2F, in some embodiments, an optical element monitoring system 200 may include a light sensor 206 configured to detect at least a portion of an imaging beam 204 from a light sensor 206 reflected from one or more of a plurality of optical elements 212. For example, as shown, a light sensor 206 may be configured to detect at least a portion of an imaging beam 204 reflected by a first optical element 218. Additionally, or in the alternative, the light sensor 206 may detect at least a portion of the imaging beam 204 reflected by a second optical element 220, such as after having been transmitted and/or refracted by the first optical element 218.

Still referring to FIGs. 2A through 2F, an optical element monitoring system 200 may be configured to determine optical anomalies, such as contamination and/or damage, that may be present upon any one or more optical elements 212, based at least in part on the reflected portion of the imaging beam 204. The existence of optical anomaly upon an optical element 212, a location of such an optical anomaly, and/or one or more characteristics of such an optical anomaly, may be determined based at least in part on the reflected portion of the imaging beam and/or one or more properties of the reflected portion of the imaging beam 204. For example, in some embodiments, an optical anomaly may be determined based at least in part on a wavelength or wavelength range of the reflected portion of the imaging beam 204. Additionally, or in the alternative, an optical anomaly may be determined based at least in part on a phase shift of the reflected portion of the imaging beam 204, such as a phase shift associated with a particular wavelength or wavelength range of the reflected portion of the imaging beam 204.

In still further embodiments, an optical anomaly may be determined based at least on a degree of focus and/or defocus of the imaging beam detected by a light sensor 206. In some embodiments, an optical anomaly may cause a backscatter and/or forward scatter that may be detected by a light sensor 206. As used herein, the terms back scatter and forward scatter refer to optical phenomena whereby an optical anomaly, such as contamination or damage to an optical element, causes unfocused light to be reflected. In the case of back scatter, at least one directional component of the imaging beam 204 is reflected back in the direction from which the imaging beam 204 prior to having been reflected. In the case of forward scatter, at least one directional component of the imaging beam 204 is reflected forward in the direction of the imaging beam 204 prior to having been reflected. In some embodiments, an optical anomaly may cause an imaging beam 204 to exhibit light scattering phenomena, such as halos, dispersion, and the like. Additionally, or in the alternative, an optical anomaly may cause an imaging beam 204 to exhibit diffraction phenomena, such as when an optical anomaly obstructs a portion of the imaging beam 204.

In some embodiments, optical anomaly information, such as information pertaining to an existence, location, and/or characteristic of an optical anomaly, may be determined using a Maxwell equation. For example, a Maxwell equation may be applied to image data obtained from a reflected portion of an imaging beam 204 detected by a light sensor 206. The Maxwell equation may be used to determine an existence, location, and/or characteristic of an optical anomaly that may cause the reflected portion of the imaging beam 204 to be detected by a light sensor 206. Exemplary Maxwell equations may include, or may be based at least in part on, a Mie solution, a Rayleigh approximation, a Rayleigh-Gans approximation, an anomalous diffraction approximation, or the like. A Mie solution may be suitable for optical anomalies that include features that are larger than or similar to the wavelength of light reflected, such as optical anomalies that have a characteristic dimension, such as a radius, of from about 400 nanometers to about 50 micrometers, such as from about 1 micrometer to about 50 micrometers. An exemplary Mie solution may utilize discrete dipole approximation or other computational techniques. A Rayleigh approximation or a Rayleigh-Gans approximation may be suitable for optical anomalies that are optically soft, such as optical anomalies that have a refractive index close to 1. Additionally, or in the alternative, a Rayleigh approximation or a Rayleigh-Gans approximation may be suitable for optical anomalies that include relatively small features, such as features that are smaller than the wavelength of reflected light. By way of illustration, Mie-type and/or Raleigh-type scattering may be exhibited by additive manufacturing powder materials, for example, as a result of a strong contrast in refractive index between pores and solid portions of melted or sintered powder material. Additionally, or in the alternative, Mie-type and/r Raleigh-type scattering may be exhibited by dust, soot, residues from fumes or vapor, and the like that may accumulate on optical elements 212.

Additionally, or in the alternative, a macroscopic Maxwell equation may be provided based at least in part on experimentally determined parameters for a phenomenological description of the electromagnetic response of the one or more optical elements 212 and one or more exemplary optical anomalies associated therewith. Additionally, or in the alternative, a relative size of an optical anomaly may be determined based at least in part on a size parameter that depends at least in part on a ration of a characteristic dimension of the anomaly and a wavelength of light reflected by the optical anomaly. For example, a dimensionless parameter, x, that characterizes a particle interaction with incident light, such as a spherical particle, may be proportional to a ratio of the radius of the particle, r, to the wavelength, X, of the light reflected, as follows: x = 2πr/λ.

Still referring to FIGs. 2A through 2E, an optical element monitoring system 200 may include an optics module 214 configured to control one or more operations of the optical element monitoring system 200. An optics module 214 may be included as part of a control system 104 associated with an additive manufacturing machine 102. The optics module 214 may be configured to cause the control system 104 to perform one or more control operations associated with the optical element monitoring system 200, such as operating the light source 202, the light sensor 206 and/or the scanner 208, and/or generating image data, and/or evaluating an optical element using the image data.

An optical element monitoring system 200 may include an optics module 214 configured to perform one or more optical element monitoring operations, including detecting optical anomalies, such as contamination and/or damage, that may be present upon any one or more optical elements 212 of an energy beam system 134, such as an optical element of an optical assembly 135. An optical element monitoring operation may be performed prior to and/or concurrently with operations for additively manufacturing a three-dimensional object. Additionally, or in the alternative, an optical element monitoring operation may be performed as part of a calibration operation, such as prior to or during additively manufacturing a three-dimensional object.

An optics module 214 may be configured to perform an optical element monitoring operation that includes determining a characteristic of an optical anomaly, such as determining whether the optical anomaly includes contamination and/or damage. Additionally, or in the alternative, an optics module 214 may be configured to perform an optical element monitoring operation that includes determining a location of an optical anomaly, such as X,Y coordinates corresponding to the optical anomaly. The X,Y coordinates corresponding to the optical anomaly may include X,Y coordinates on and optical element and/or X,Y coordinates on a build plane 130.

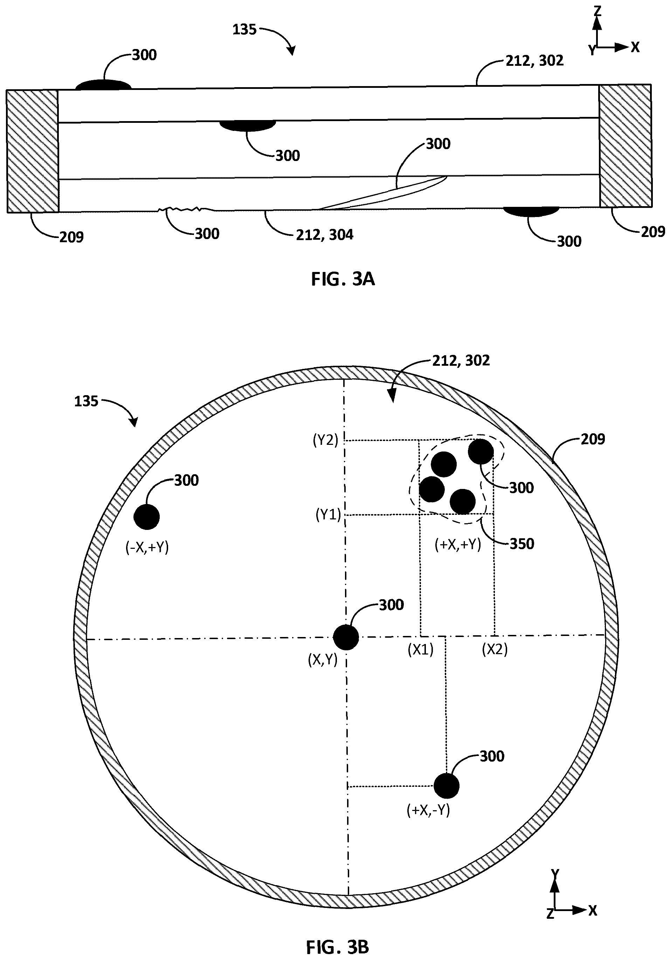

Now turning to FIGs. 3A and 3B, exemplary optical anomalies 300 will be described. As shown in FIG. 3A, an optical assembly 135 may include a plurality of optical elements 212, such as a first lens 302 and a second lens 304. The optical assembly 135 and/or the plurality of optical elements 212 may be supported by one or more frames 209. For example, the one or more frames 209 may support the first lens 302 and/or the second lens 304. Exemplary optical anomalies 300 that may be detected by an optical element monitoring system 200 include contamination and/or damage. For example, contaminants associated with the additive manufacturing process, such as powder material, dust, soot, residues from fumes or vapor, and the like may become deposited on the one or more optical elements 212. Additionally, or on the alternative, the one or more optical elements 212 may exhibit damage such as cracks, scratches, pitting, and the like.

Optical anomalies 300 may be located on an external optical element 212, such as an optical eminent 212 that is exposed to the process chamber 137 of an additive manufacturing machine 102. For example, powder material, dust, soot, residues from fumes or vapor, and the like may become deposited on a window or protective glass that separates one or more components of the energy beam system 134 from conditions existing within a process chamber 137 of an additive manufacturing machine 102. Additionally, or in the alternative, optical anomalies 300 may be located on an internal optical element 212, such as an optical element housed within a frame 209 of an energy beam system 134 and/or a frame 209 of an imaging system 162. For example, powder material, dust, soot, residues from fumes or vapor, and the like may propagate into spaces between optical elements 212 and become deposited on internal surfaces of such optical elements 212.

Contaminants may cause damage to optical elements, such as pitting and/or cracks. For example, contaminants that have deposited on an optical element 212 may be heated by an energy beam 142, 148, thereby damaging the optical element 212. The location of such optical anomalies may be determined by an optical element monitoring system 200. For example, an optical element monitoring system 200 may be configured to determine an optical element 212 that exhibits an optical anomaly 300 from among a plurality of optical elements 212. Additionally, or in the alternative, the optical element monitoring system 200 may be configured to determine a location of an optical anomaly 300 on an optical element 212. For example, the optical element monitoring system 200 may be configured to determine whether the optical anomaly is located on an external surface, an internal surface, or within an internal material of an optical element 212. Additionally, or in the alternative, the optical element monitoring system 200 may be configured to determine X,Y, and/or Z coordinates of an optical anomaly 300.

FIG. 3B shows exemplary X,Y coordinates for a plurality of optical anomalies 300 on an optical element 212. In some embodiments, optical element monitoring system 200 may be configured to determine an anonymous region 350 of an optical element 212. An anomalous region 350 may be determined based at least in part on a size of an optical anomaly 300 and/or a quantity of optical anomalies 300 in proximity to one another. An anomalous region 350 may define a perimeter around one or more optical anomalies 300. The anomalous region 350 may be configured and arranged so as to provide a buffer or space between the perimeter of the anomalous region 350 and the one or more optical anomalies 300 within the anomalous region 350.

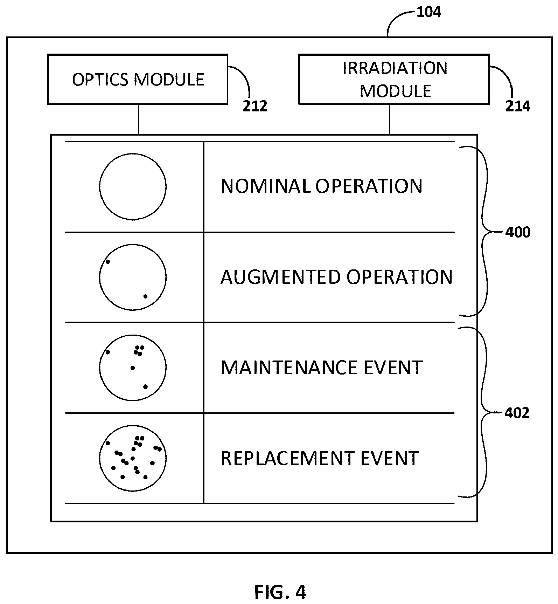

Referring now to FIG. 4, in some embodiments, an optical element monitoring system 200 may additionally or alternatively include an optics module 214 configured to perform an optical element monitoring operation that includes determining one or more operational states 400 and/or one or more remedial events 402, for example, responsive at least in part to an optical anomaly having been detected and/or responsive to an absence of an optical anomaly. The one or more operational states 400 may include a nominal operational state and/or one or more augmented operational states, including, for example, one or more operational states 400 as for an additive manufacturing machine 102, an energy beam system 134, and/or one or more irradiation devices 138, 140 and/or other components thereof. A control system 104, and/or an optical element monitoring system 200 may additionally or alternatively include an irradiation module 216 configured to cause an energy beam system 134 to perform one or more operations, such as one or more operations associated with irradiating sequential layers of a powder bed 136, based at least in part on an input from the optics module 214. For example, the irradiation module 216 may be configured to cause the energy beam system 134 to perform one or more irradiation operations. The one or more irradiation operations may be performed to additively manufacture three-dimensional objects and/or in connection with a calibration operation.

In some embodiments, an optics module 214 may be configured to perform an optical element monitoring operation that includes determining a nominal operational state. The irradiation module 216 may cause the energy beam system 134 to perform one or more operations in accordance with the nominal operational state. A nominal operational state may be determined in the absence of an optical anomaly, and/or in the event of an optical anomaly having been determined to be immaterial to nominal operation, and/or in the event of an optical anomaly having been determined to be mitigatable such that nominal operation may be sustained.

Additionally or in the alternative, an optics module 214 may be configured to perform an optical element monitoring operation that includes determining an augmented operational state. The irradiation module 216 may cause the energy beam system 134 to perform one or more augmented operating conditions in accordance with the augmented operational state. An augmented operational state may be determined, for example, in the event of an optical anomaly, such as in the event of an optical anomaly having been determined to be material to nominal operation an additive manufacturing machine 102, an energy beam system 134, and/or one or more irradiation devices 138, 140 and/or other components thereof. An augmented additive manufacturing operation may include, by way of example, augmenting one or more energy beam parameters, augmenting a usable scan field 144, 150 of an energy beam 142, 148, and/or augmenting an allocation of an interlace region 154 between a plurality of irradiation devices 138, 140, responsive at least in part to an optical anomaly having been detected and/or responsive to an absence of an optical anomaly. An augmented additive manufacturing operation may allow an additive manufacturing machine 102, an energy beam system 134, and/or one or more irradiation devices 138, 140 and/or other components thereof to continue operating, for example, until one or more future remedial events 402 take place. In some embodiments, an augmented additive manufacturing operation may include irradiating sequential layers of a powder bed while avoiding one or more optical anomalies as determined by the optics module 214. Additionally, or in the alternative, one or more portions of the build plane 130, such as one or more portions of an interlace region 154, may be assigned to be irradiated by respective ones of a plurality of irradiation devices 138, 140, based at least in part on a location of one or more optical anomalies determined by the optics module. In some embodiments, an optics module 214 may designate one or more portions of a build plane region 146, 152 as useable and/or unusable for additively manufacturing a three-dimensional object based at least in part on one or more optical anomalies on an optical element 212.

Additionally, or in the alternative, an optics module 214 may be configured to perform an optical element monitoring operation that includes determining one or more remedial events 402. The irradiation module 216 may cause the energy beam system 134 to perform one or more operations in accordance with the one or more remedial events 402. The one or more remedial events 402 may include one or more maintenance events and/or one or more replacement events. The one or more maintenance events may include cleaning, repair, and/or calibration events, for example, responsive at least in part to an optical anomaly having been detected. The one or more replacement events may include replacing one or more optical elements 212, for example, responsive at least in part to an optical anomaly having been determined by the optics module 214.

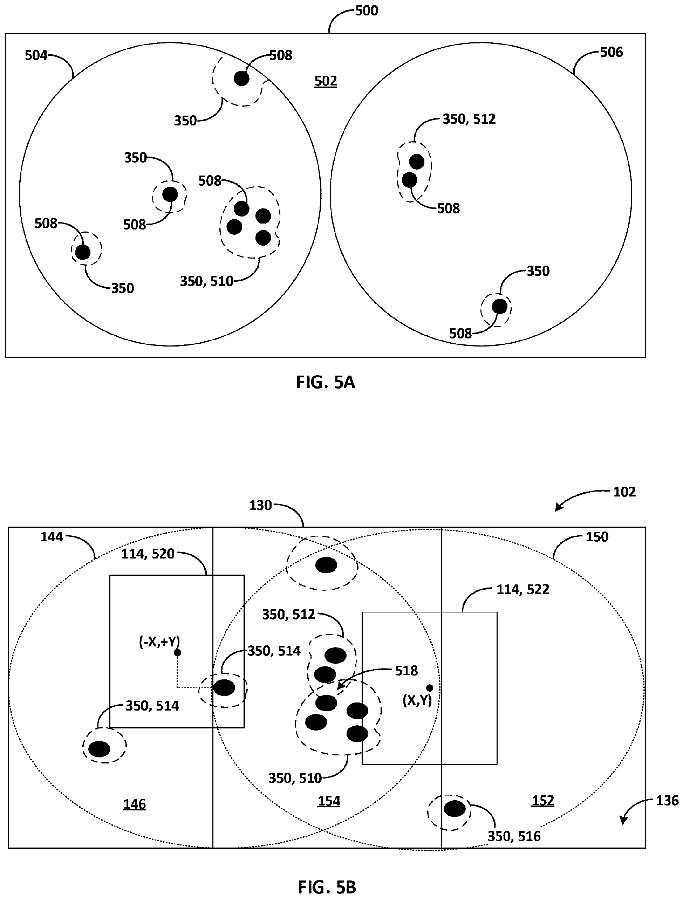

Referring now to FIGs. 5A and 5B, an exemplary embodiment of an augmented additive manufacturing operation will be described. The augmented additive manufacturing operation may be performed during an augmented operational state. The augmented additive manufacturing operation may be determined at least in part by an optical element monitoring system 200. The augmented additive manufacturing operation may be determined based at least in part on an augmented operational state determined by the optical element monitoring system 200. By way of, a control system 104 may include an optics module 214 configured to determine an augmented operational state and to provide a control command configured to cause an augmented additive manufacturing operation. Additionally, or in the alternative, a control system 104 may include an irradiation module 216 configured to cause an augmented additive manufacturing operation, for example, based at least in part on a control command from the optics module 214. The control system 104 may be configured to cause an additive manufacturing machine 102 to carry out an augmented additive manufacturing operation, for example, based at least in part on a control command from an optics module 214 and/or a control command from an irradiation module 216.

FIG. 5A shows visual depiction of image data 500. The image data 500 may be embodied in a digital image 502. The image data 500 may include a digital image 502 representing optical anomalies on one or more optical elements 212, such as a first one or more optical elements 504 and/or a second one or more optical elements 506. The first one or more optical elements 504 may correspond to and/or may define a portion of a first irradiation device 138. The second one or more optical elements 506 may correspond to and/or may define a portion of a second irradiation device 140. The digital image 502 may be generated from image data obtained from an optical element monitoring system 200, such as image data obtained at least in part from one or more light sensors 206. The digital image 502 may include one or more anomalous regions 350. The one or more anomalous regions 350 may respectively define a portion of the digital image 502 corresponding to one or more optical anomalies 300 determined from the image data 500. As shown, the optical anomalies 300 may be digitally represented in the image data 500 and/or in a digital image 502, such as in the form of a digitally represented optical anomaly 508.

Any suitable image processing technology may be utilized to process the image data 500, including, for example, a computer vision program that detects pixels in the image data and/or signals from a light sensor 206. In some embodiments, a digital image 502 may be provided, for example, to visually depict image data 500. The digital image 502 may be provided for display, such as on a visual display associated with a user interface 108. It will be apricated however, that in some embodiments, a digital image 502 need not be displayed nor even generated. Rather, in some embodiments, the digital image 502 may be provided in the figures for the illustrative purpose of visualizing the image data 500.

FIG. 5B shows a build plane 130 of an additive manufacturing machine 102. The build plane 130 may include a first build plane region 146 and a second build plane region 152. The first build plane region 146 and a second build plane region 152 may overlap with one another, and the overlapping portion may define an interlace region 154. As shown in FIG. 1, the first build plane region 146 may be irradiated by a first energy beam 142 from a first irradiation device 138, and the second build plane region 152 may be irradiated by a second energy beam 148 from a second irradiation device 140. As shown in FIG. 5B, the first scan field 144 of the first energy beam 142 and the second scan field 150 of the second energy beam 148 are superimposed on the build plane 130. At least a portion of the interlace region 154 may be irradiated by the first energy beam 142 from the first irradiation device 138 and/or the second energy beam 148 from the second irradiation device 140.

As shown in FIG. 5B, exemplary anomalous regions 350 and the corresponding digitally represented optical anomalies 508 from FIG. 5A are superimposed on the build plane 130. As shown, the image data 500 may include a first anomalous region 510 corresponding to the first one or more optical elements 504, and/or a second anomalous region 512 corresponding to the second one or more optical elements 506. In some embodiments, irradiation of a build plane 130 may be assigned to respective irradiation devices 138, 140 based at least in part on one or more anomalous regions 350 identified in the image data 500. Additionally, or in the alternative, one or more irradiation parameters may be augmented based at least in part on one or more optical anomalies 300 and/or one or more anomalous regions 350 identified in the image data 500. Exemplary irradiation parameters that may be augmented include beam power, spot size, scan speed, power density profile.

In some embodiments, portions of the interlace region 154 may be assigned as between the first irradiation device 138 and the second irradiation device 140 based at least in part on one or more anomalous regions 350 identified in the image data 500. For example, portions of the interlace region 154 may be assigned as between the first irradiation device 138 and the second irradiation device 140 so as to avoid anomalous regions 350. By way of example, irradiation may be performed in a first portion of the interlace region 154 corresponding to the first anomalous region 510 by the second energy beam 148 from the second irradiation device 140. In this way, any optical anomalies 300 corresponding to the first anomalous region 510 may be avoided. Additionally, or in the alternative, irradiation may be performed in a second portion of the interlace region 154 corresponding to the second anomalous region 512 by the first energy beam 142 from the first irradiation device 138. In this way, any optical anomalies 300 corresponding to the second anomalous region 512 may be avoided.

In some embodiments, one or more portions of the build plane 130 may be designated for augmented irradiation based at least in part on one or more anomalous regions 350 identified in the image data 500. Augmented irradiation may include augmenting at least one irradiation parameter and/or restricting irradiation by an irradiation device 138, 140 that includes or utilizes an optical element 212 that has an optical anomaly 300 corresponding to the anomalous region 350 designated for augmented irradiation. A portion of the first build plane region 146 corresponding to an anomalous region 350 associated with the first one or more optical elements 504 may be designated as a non-irradiation region. Additionally, or in the alternative, a portion of the second build plane region 152 corresponding to an anomalous region 350 associated with the second one or more optical elements 506 may be designated as a non-irradiation region. By way of example, FIG. 5B shows a third anomalous region 514 in the first build plane region 146 and a fourth anomalous region 516 in the second build plane region 152. As another example, a portion of the interlace region 154 corresponding to an overlapping portion of the first anomalous region 510 and the second anomalous region 512 may define a fifth anomalous region 518. In some embodiments, one or more irradiation parameters may be augmented to at least partially mitigate and/or offset the existence of an optical anomaly 300. In this way, irradiation may be performed even in the existence of an optical anomaly 300. Additionally, or in the alternative, irradiation may be restricted with respect to portions of the build plane 130 that correspond to an anomalous region 350. For example, irradiation may be restricted when augmenting one or more irradiation parameters may be insufficient to satisfactorily mitigate and/or offset the existence of an optical anomaly 300. In this way, the potential for an optical anomaly 300 to cause a quality problem in an additively manufactured object 114 may be avoided. By way of example, the fifth anomalous region 518 may be restricted from being irradiated, such as when the optical anomalies 300 associated with the overlapping portion of the first anomalous region 510 and the second anomalous region 512 might not be, or cannot be, satisfactorily mitigated and/or offset by augmenting one or more irradiation parameters.

In some embodiments, a location of a build plane 130 for additively manufacturing an object 114, such as X,Y coordinates of the build plane 130, may be selected based at least in part on one or more anomalous regions 350 identified in the image data 500. For example, one or more objects 114 may be additively manufactured at locations of the build plane 130 selected based at least in part to avoid one or more anomalous regions 350 and/or to minimize the number of anomalous regions 350 that may overlap the object 114. Such location of the build plane 130 may be selected based at least in part on one or more one or more layers of the object 114, including an aggregate cross-sectional area of a plurality of layers of the object 114 and/or a cross-sectional area of any one or more layers of the object 114. By way of example, FIG. 5B shows a location for a first object 520 and a second object 522. The first object 520 may be adjusted and/or offset, for example, to avoid the third anomalous region 514. In some embodiments, the offset may be applied with respect to a center point of the first build plane region 146 relative to a center point of the first object 520. The first object 520 may be overlapped by a sixth anomalous region 524 associated with the first one or more optical elements 504. The portion of the first object 520 overlapped by the sixth anomalous region 524 may be irradiated by the second irradiation device 140, thereby avoiding any optical anomalies 300 associated with the sixth anomalous region 524. Additionally, or in the alternative, the portion of the first object 520 overlapped by the sixth anomalous region 524 may be irradiated by the first irradiation device 138 with one or more augmented irradiation parameters. The second object 522, such as a center point of the second object 522, may be aligned with respect to the center point of the second build plane region 152. The second object 522 may be overlapped by the first anomalous region 510. The entirety of the second object 522, including the portion of the second object 522 overlapped by the first anomalous region 510, may be irradiated by the second irradiation device 140, thereby avoiding any optical anomalies 300 associated with the first anomalous region 510. Additionally, or in the alternative, the portion of the second object 522 overlapped by the first anomalous region 510 may be irradiated by the first irradiation device 138 with one or more augmented irradiation parameters.

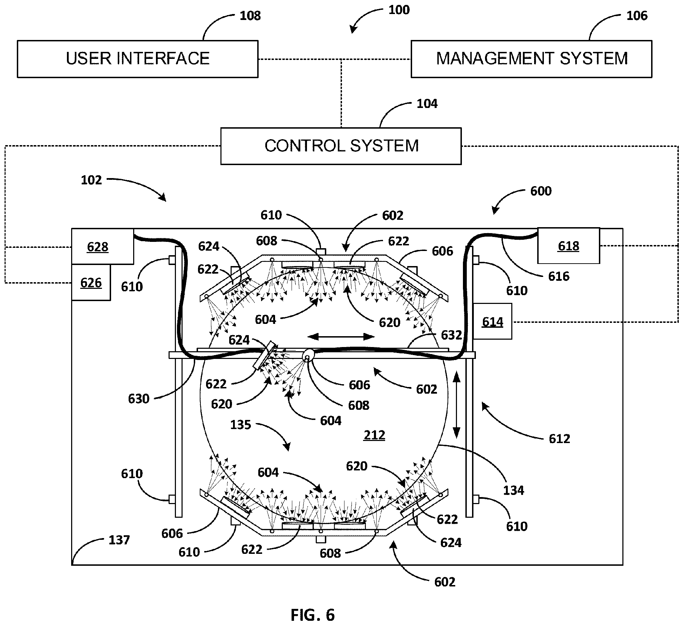

Now referring to FIG. 6, in some embodiments, an optical element monitoring system 200 may include a maintenance system 600. The maintenance system 600 may include one or more components configured to perform one or more maintenance operations associated with a maintenance event, such as one or more maintenance operations associated with cleaning, repairing, and/or calibrating one or more components of the additive manufacturing machine 102, the energy beam system 134, the imaging system 162, and/or the optical element monitoring system 200. As shown in FIG. 6, in some embodiments, a maintenance system 600 may include one or more cleaning assemblies 602 configured to apply a stream of cleaning fluid 604 to one or more optical elements 212 of an optical assembly 135. For example, a cleaning assembly 602 may include one or more sprayers 606 configured to spray cleaning fluid 604 in proximity to the one or more optical elements 212. The one or more sprayers 606 may be in the form of one or more individual spray elements and/or one or more spray manifolds. The one or more sprayers 606 may include one or more spray nozzles 608 oriented or orientable in proximity one or more optical anomalies 300 and/or anomalous regions 350 of the one or more optical elements 212.

In some embodiments, the one or more sprayers 606 may be mounted inside a process chamber 137 of an additive manufacturing machine. For example, the sprayers 606 may be mounted on one or more chamber frames 610. The one or more chamber frames 610 may be mounted inside the process chamber 137 and/or the one or more chamber frames 610 may define a portion of the process chamber 137. Additionally, or in the alternative, the one or more sprayers 606 may be mounted to a gantry system 612. The gantry system 612 may be mounted to one or more of the chamber frames 610. The gantry system 612 may include a gantry motor 614 configured to move one or more sprayers 606 in one or more directions, such as a horizontal, lateral, and/or vertical direction, relative to one or more optical elements 212 intended to be sprayed with cleaning fluid 604 from the one or more sprayers 606. The cleaning fluid 604 may be supplied to the one or more sprayers 606 by one or more fluid supply lines 616. The cleaning fluid 604 may be housed in a fluid reservoir 618, and the one or more fluid supply lines 616 may provide fluid communication between the fluid reservoir 618 and the one or more sprayers 606. Any suitable cleaning fluid 604 may be utilized, including gaseous and/or liquid fluids. In an exemplary embodiment, the cleaning fluid 604 may include an inert gas. Additionally, or in the alternative, the cleaning fluid 604 may include water or alcohol. In some embodiments, the cleaning fluid 604 may include a surfactant, such as a detergent, a wetting agent, an emulsifier, a foaming agent, and/or a dispersant.

In addition, or as an alternative, to applying a stream of cleaning fluid 604, a maintenance system 600 may include one or more cleaning assemblies 602 configured to provide a vacuum stream 620 in proximity to one or more optical elements 212 of an optical assembly 135. For example, a cleaning assembly 602 may include one or more vacuums 622 configured to intake the vacuum stream 620. The one or more vacuums 622 may be in the form of one or more individual vacuum elements and/or one or more vacuum manifolds. The vacuum stream 620 may include any fluid or solid material, or combination thereof, such as the stream of cleaning fluid sprayed from a sprayer 606 and/or contaminants dislodged by the stream of cleaning fluid 604. The one or more vacuums 622 may include one or more vacuum nozzles 624. The one or more vacuum nozzles 624 may be oriented or orientable in proximity one or more optical anomalies 300 and/or anomalous regions 350 of the one or more optical elements 212.

In some embodiments, the one or more vacuums 622 may be mounted inside a process chamber 137 of an additive manufacturing machine. For example, the vacuums 622 may be mounted on one or more chamber frames 610. The one or more chamber frames 610 may be mounted inside the process chamber 137 and/or the one or more chamber frames 610 may define a portion of the process chamber 137. Additionally, or in the alternative, the one or more vacuums 622 may be mounted to a gantry system 612. The gantry system 612 may be mounted to one or more of the chamber frames 610. The gantry motor 614 may be configured to move one or more vacuums 622 in one or more directions, such as a horizontal, lateral, and/or vertical direction, relative to one or more optical elements 212 intended to receive a vacuum stream 620 flowing into the one or more vacuums 622. The vacuum stream may be provided by way of a vacuum pump 626. The vacuum stream 620 may flow to a vacuum reservoir 628 by way of one or more vacuum lines 630 that provides fluid communication between the one or more vacuums 622 and the vacuum reservoir 628.

In some embodiments, an exemplary maintenance system may include one or more wipers 632. The one or more wipers 632 may be configured to wipe one or more optical elements 212, such as in coordination with operation of the one or more sprayers 606 and/or in coordination with the one or more vacuums 622. For example, the one or more sprayers 606 may spray cleaning fluid 604 onto a surface of the one or more optical elements 212. The one or more wipers 632 may wipe the cleaning fluid 604 and contaminants such as powder material, dust, soot, residues from fumes or vapor, and the like away from the one or more optical elements 212. In some embodiments, the one or more wipers 632 may be mounted to a gantry system 612. The one or more wipers 632 may be movable by operation of the gantry system 612. Additionally, or in the alternative, the one or more wipers 632 may be operable independently from the gantry system 612. A wiper 632 may be utilized when cleaning an optical element 212 using a liquid and/or a gas cleaning fluid 604. However, in some embodiments, a wiper may not be necessary, such as with embodiments that provide a contactless cleaning approach, using a cleaning fluid 604 without a wiper 632, to avoid physical contact with the optical element 212 by a solid object such as a wiper 632. In some embodiments, a wiper 632 may be configured to wipe cleaning fluid and/or contaminants 632 from a perimeter of an optical element 212, such as from a frame 209 supporting and/or surrounding an optical element 212.

One or more elements of the maintenance system 600 may be communicatively coupled with a control system 104. The control system 104 may be configured to cause the maintenance system 600 to perform a maintenance operation, such as cleaning operation. The cleaning operation may be initiated as a maintenance event, or at least a portion thereof, such as in connection with a remedial event 402 described, for example, with reference to FIG. 4. For example, the control system 104 may include an optics module 214 configured to cause the maintenance system 600 to perform a cleaning operation as, or in connection with, a remedial event 402 responsive to one or more optical anomalies 300 having been detected by the optics module 214. In some embodiment, the maintenance system 600 may be configured to selectively spray cleaning fluid 604 on a region of an optical element 212 that corresponds to an anomalous region 350, such as responsive to the anomalous region 350 having been determined by the optics module 214. Additionally, or in the alternative, the maintenance system 600 may be configured to selectively vacuum a region of an optical element 212 that corresponds to an anomalous region 350, such as responsive to the anomalous region 350 having been determined by the optics module 214.

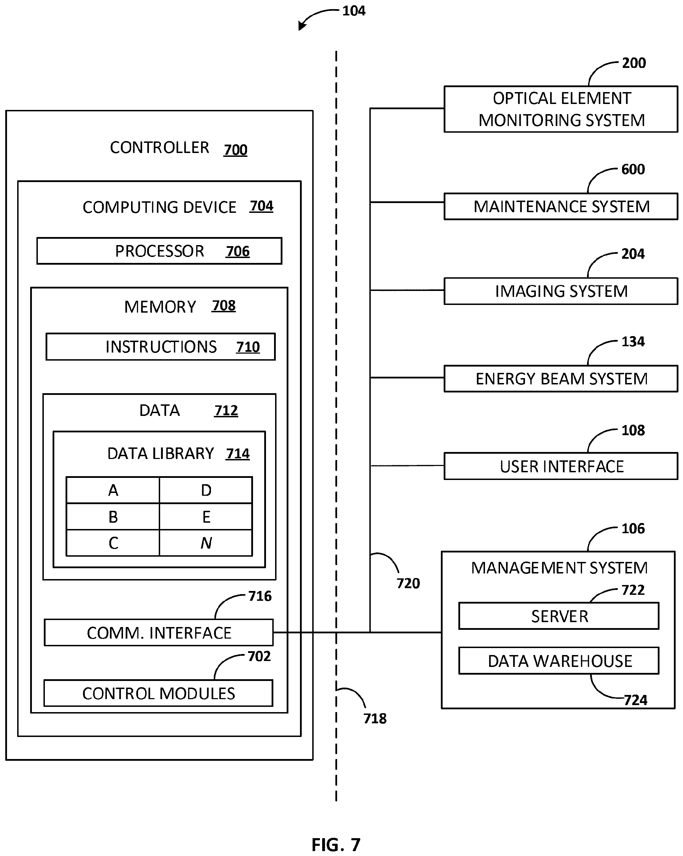

Now turning to FIG. 7, and exemplary control system 104 will be described. In some embodiments, a control system 104 may be configured to perform one or more control operations. A control system 104 may be configured to output one or more control commands associated with an additive manufacturing machine 102. The control commands may include control commands configured to control one or more controllable components of an additive manufacturing system 100 and/or an additive manufacturing machine 102. For example, one or more control commands may be configured to control operations of optical element monitoring system 200 and/or a maintenance system 600.

As shown in FIG. 7, an exemplary control system 104 includes a controller 700. The controller may include one or more control modules 702 configured to cause the controller 700 to perform one or more control operations. The one or more control modules 702 may include control logic executable to provide control commands configured to control one or more controllable components associated with an additive manufacturing machine 102, such as controllable components associated with an energy beam system 134, an imaging system 162, an optical element monitoring system 200 and/or a maintenance system 600. For example, a control module 702 may be configured to provide one or more control commands executable to control operation of a light source 202, a light sensor 206, a scanner 208 and/or other controllable components associated with an optical element monitoring system 200. Additionally, or in the alternative, control module 702 may be configured to provide one or more control commands executable to control operation of one or more sprayers 606, one or more vacuums 622, and/or other controllable components associated with a maintenance system 600.

The controller 700 may be communicatively coupled with an additive manufacturing machine 102. In some embodiments, the controller 700 may be communicatively coupled with one or more components of an additive manufacturing machine 102, such as one or more components of an optical element monitoring system 200, a maintenance system 600, an energy beam system 134, and/or an imaging system 162. The controller 700 may also be communicatively coupled with a management system 106 and/or a user interface 108.

The controller 700 may include one or more computing devices 704, which may be located locally or remotely relative to the additive manufacturing machine 102, the imaging system 162, the optical element monitoring system 200, and/or the maintenance system 600. The one or more computing devices 704 may include one or more processors 706 and one or more memory devices 708. The one or more processors 706 may include any suitable processing device, such as a microprocessor, microcontroller, integrated circuit, logic device, and/or other suitable processing device. The one or more memory devices 708 may include one or more computer-readable media, including but not limited to non-transitory computer-readable media, RAM, ROM, hard drives, flash drives, and/or other memory devices 708.

The one or more memory devices 708 may store information accessible by the one or more processors 706, including computer-executable instructions 710 that can be executed by the one or more processors 706. The instructions 710 may include any set of instructions which when executed by the one or more processors 706 cause the one or more processors 706 to perform operations, including optical element monitoring operations, maintenance operations, cleaning operations, calibration operations, and/or additive manufacturing operations.

The memory devices 708 may store data 712 accessible by the one or more processors 706. The data 712 can include current or real-time data 712, past data 712, or a combination thereof. The data 712 may be stored in a data library 714. As examples, the data 712 may include data 712 associated with or generated by an additive manufacturing system 100 and/or an additive manufacturing machine 102, including data 712 associated with or generated by the controller 700, an additive manufacturing machine 102, an energy beam system 134, an imaging system 162, an optical element monitoring system 200, a maintenance system 600, a management system 106, a user interface 108, and/or a computing device 704. Such data 712 may pertain to operation of an energy beam system 134, an imaging system 162, an optical element monitoring system 200 and/or a maintenance system 600. The data 712 may also include other data sets, parameters, outputs, information, associated with an additive manufacturing system 100 and/or an additive manufacturing machine 102.

The one or more computing devices 704 may also include a communication interface 716, which may be used for communications with a communication network 718 via wired or wireless communication lines 720. The communication interface 716 may include any suitable components for interfacing with one or more network(s), including for example, transmitters, receivers, ports, controllers, antennas, and/or other suitable components. The communication interface 716 may allow the computing device 704 to communicate with various nodes on the communication network 718, such as nodes associated with the additive manufacturing machine 102, the energy beam system 134, the imaging system 162, the optical element monitoring system 200, the maintenance system 600, the management system 106, and/or a user interface 108. The communication network 718 may include, for example, a local area network (LAN), a wide area network (WAN), SATCOM network, VHF network, a HF network, a Wi-Fi network, a WiMAX network, a gatelink network, and/or any other suitable communication network 718 for transmitting messages to and/or from the controller 700 across the communication lines 720. The communication lines 720 of communication network 718 may include a data bus or a combination of wired and/or wireless communication links.

The communication interface 716 may allow the computing device 704 to communicate with various components of an additive manufacturing system 100 and/or an additive manufacturing machine 102 communicatively coupled with the communication interface 716 and/or communicatively coupled with one another, including an energy beam system 134, an imaging system 162, an optical element monitoring system 200, and/or a maintenance system 600. The communication interface 716 may additionally or alternatively allow the computing device 704 to communicate with the management system 106 and/or the user interface 108. The management system 106 may include a server 722 and/or a data warehouse 724. As an example, at least a portion of the data 712 may be stored in the data warehouse 724, and the server 722 may be configured to transmit data 712 from the data warehouse 724 to the computing device 704, and/or to receive data 712 from the computing device 704 and to store the received data 712 in the data warehouse 724 for further purposes. The server 722 and/or the data warehouse 724 may be implemented as part of a control system 104 and/or as part of the management system 106.

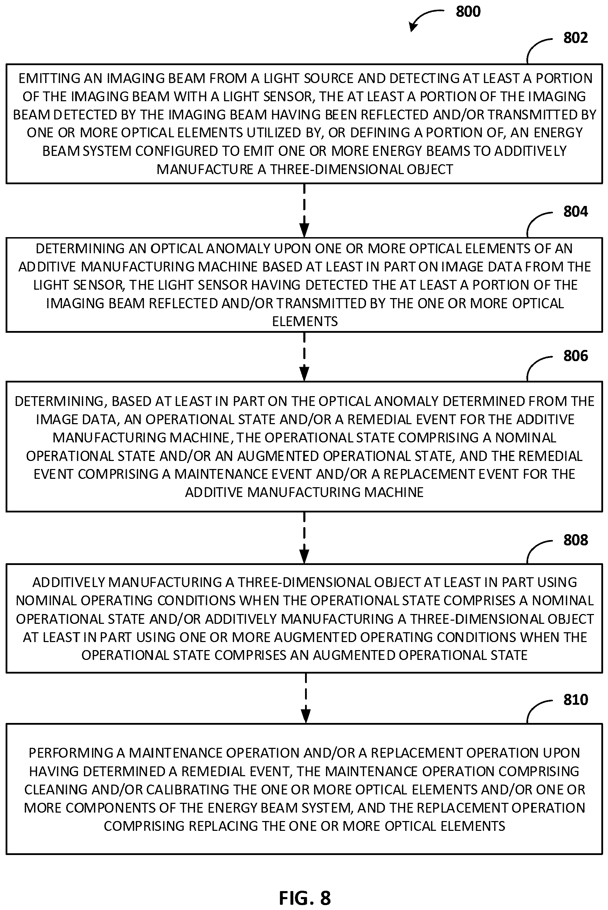

Now turning to FIG. 8, exemplary methods 800 of monitoring and/or maintaining an optical assembly will be described, including exemplary methods 800 of additively manufacturing a three-dimensional object 114, such as methods of 800 of additively manufacturing a three-dimensional object 114 using an additive manufacturing system 100 that includes an optical element monitoring system 200 and/or a maintenance system 600. As shown in FIG. 8, an exemplary method 800 may include, at block 802, emitting an imaging beam 204 from a light source 202 and detecting at least a portion of the imaging beam 204 with a light sensor 206. The at least a portion of the imaging beam detected by the imaging beam 204 may be reflected and/or transmitted by one or more optical elements 212 of an additive manufacturing machine 102 such that the imaging beam 204 becomes incident upon the light sensor 206. The one or more optical elements 212 may be utilized by, or define a portion of, an energy beam system 134 configured to emit one or more energy beams 142, 148 to additively manufacture a three-dimensional object 114. An exemplary method may include, at block 804, determining an optical anomaly 300 upon one or more optical elements 212 of an additive manufacturing machine 102 based at least in part on image data 500 of an imaging beam 204 detected by light sensor 206. The imaging beam 204 detected by the light sensor 206 may be emitted by a light source 202, and reflected and/or transmitted by one or more optical elements 212 such that the imaging beam 204 becomes incident upon the light sensor 206.

An exemplary method 800 may include, at block 806, determining, based at least in part on the optical anomaly 300 determined from the image data 500, an operational state and/or a remedial event for the additive manufacturing machine 102, such as for the one or more optical elements 212 and/or for an energy beam system 134 that comprises and/or utilizes the one or more optical elements 212. The operational state may include a nominal operational state and/or an augmented operational state. The remedial event may include a maintenance event and/or a replacement event for the additive manufacturing machine 102, such as for the one or more optical elements 212 and/or for the energy beam system 134.

An exemplary method 800 may include, at block 808, additively manufacturing a three-dimensional object 114 at least in part using nominal operating conditions when the operational state comprises a nominal operational state. Additionally, or in the alternative, an exemplary method 800 may include, at block 808, additively manufacturing the three-dimensional object 114 at least in part using one or more augmented operating conditions when the operational state comprises an augmented operational state. An method 800 may include, at block 810, performing a maintenance operation and/or a replacement operation upon having determined a remedial event. The maintenance operation may include cleaning, repairing, and/or calibrating the additive manufacturing machine, such as the one or more optical elements 212 and/or the one or more components of the energy beam system 134. The replacement operation may include replacing the one or more optical elements and/or the one or more components of the energy beam system 134.

Further aspects of the invention are provided by the subject matter of any of the following clauses and/or combinations thereof:
1. A method of operating an additive manufacturing machine, the method comprising: determining an operational state and/or a remedial event for an additive manufacturing machine, the operational state and/or the remedial event determined based at least in part on one or more optical anomalies having been determined upon one or more optical elements based at least in part on image data from a light sensor, the one or more optical elements utilized by, or defining a portion of, an energy beam system configured to emit one or more energy beams to additively manufacture a three-dimensional object, the light sensor having detected a reflected portion of an imaging beam, the imaging beam emitted by a light source and the reflected portion reflected by the one or more optical elements, wherein the operational state comprises a nominal operational state and/or an augmented operational state, and wherein the remedial event comprises a maintenance event and/or a replacement event; additively manufacturing the three-dimensional object at least in part using nominal operating conditions when the operational state comprises a nominal operational state; and additively manufacturing the three-dimensional object at least in part using one or more augmented operating conditions when the operational state comprises an augmented operational state; and/or performing a maintenance operation upon having determined the remedial event that comprises the maintenance event, the maintenance operation comprising cleaning and/or calibrating the one or more optical elements and/or one or more components of the energy beam system; and/or performing a replacement operation upon having determined the remedial event that comprises the replacement event, the replacement operation comprising replacing the one or more optical elements.
2. The method of any preceding clause, comprising: emitting the imaging beam from the light source and detecting the reflected portion of the imaging beam with the light sensor, the reflected portion of the imaging beam having been reflected by the one or more optical elements of the additive manufacturing machine.
3. The method of any preceding clause, comprising: detecting the reflected portion of the imaging beam with the light sensor; and determining the one or more optical anomalies upon the one or more optical elements of the additive manufacturing machine based at least in part on the image data from the light sensor.
4. The method of any preceding clause, comprising: determining the one or more optical anomalies based at least in part on a degree of focus and/or defocus of the at least a portion of the imaging beam detected by the light sensor.
5. The method of any preceding clause, comprising: determining the one or more optical anomalies based at least in part on backscatter and/or forward scatter of the at least a portion of the imaging beam detected by the light sensor.
6. The method of any preceding clause, comprising: determining the one or more optical anomalies upon the one or more optical elements of the additive manufacturing machine based at least in part on the image data from the light sensor, wherein determining the one or more optical anomalies comprises: determining an existence, location, and/or characteristic of the one or more optical anomalies.
7. The method of any preceding clause, comprising: determining the existence, location, and/or characteristic of the one or more optical anomalies at least in part using a Maxwell equation.
8. The method of any preceding clause, wherein the Maxwell equation comprises and/or is based at least in part on a Mie solution, a Rayleigh approximation, a Rayleigh-Gans approximation, and/or an anomalous diffraction approximation.
9. The method of any preceding clause, wherein the one or more optical anomalies comprises contaminants on the one or more optical elements, and/or wherein the one or more optical anomalies comprises damage to the one or more optical elements.
10. The method of any preceding clause, comprising: determining the operational state and/or the remedial event for the additive manufacturing machine based at least in part on an anomalous region of the one or more optical elements, wherein the anomalous region is determined based at least in part on a size and/or quantity of the one or more optical anomalies.
11. The method of any preceding clause, comprising: performing a maintenance operation on the first optical element upon having determined the remedial event based at least in part on the one or more optical anomalies having been determined from the first reflected portion, the maintenance operation comprising cleaning and/or calibrating the first optical element and/or one or more components of the additive manufacturing machine that utilize the first optical element; and/or performing a maintenance operation on the second optical element upon having determined the remedial event based at least in part on the one or more optical anomalies having been determined from the second reflected portion, the maintenance operation comprising cleaning and/or calibrating the second optical element and/or one or more components of the additive manufacturing machine that utilize the second optical element.
12. The method of any preceding clause, comprising: performing a replacement operation on the first optical element upon having determined the remedial event based at least in part on the one or more optical anomalies having been determined from the first reflected portion, the replacement operation comprising replacing the first optical element; and/or performing a replacement operation on the second optical element upon having determined the remedial event based at least in part on the one or more optical anomalies having been determined from the second reflected portion, the replacement operation comprising replacing the second optical element.
13. The method of any preceding clause, wherein the additive manufacturing machine comprises a first irradiation device configured to irradiate a first build plane region with a first energy beam that passes through a first one or more optical elements, and a second irradiation device configured to irradiate a second build plane region with a second energy beam that passes through a second one or more optical elements, the first build plane region and the second build plane region overlapping one another at an interlace region; wherein the one or more augmented operating conditions comprises assigning at least a first portion of the interlace region to the second irradiation device when the one or more optical anomalies comprises a first one or more optical anomalies having been determined upon the first one or more optical elements, wherein the first energy beam would intersect the first one or more optical anomalies when oriented along a first beam path directed to the at least a first portion of the interlace region assigned to the second irradiation device; and/or wherein the one or more augmented operating conditions comprises assigning at least a second portion of the interlace region to the first irradiation device when the one or more optical anomalies comprises a second one or more optical anomalies having been determined upon the second one or more optical elements, wherein the second energy beam would intersect the second one or more optical anomalies when oriented along a second beam path directed to the at least a second portion of the interlace region assigned to the first irradiation device.
14. The method of any preceding clause, wherein the one or more augmented operating conditions comprises: offsetting and/or adjusting a location on a build plane for an object to be additively manufactured.
15. The method of any preceding clause, wherein the one or more augmented operating conditions comprises: providing a cleaning fluid in proximity to the one or more optical elements, the cleaning fluid provided by one or more sprayers; and/or providing a vacuum stream in proximity to the one or more optical elements, the vacuum stream provided by one or more vacuums.
16. The method of any preceding clause, comprising: selectively spraying the cleaning fluid in proximity to a portion of the one or more optical elements determined based at least in part on a location of the one or more optical anomalies, the location of the one or more optical anomalies determined based at least in part on the image data; and/or selectively applying a vacuum stream in proximity to a portion of the one or more optical elements determined based at least in part on the location of the one or more optical anomalies determined based at least in part on the image data.
17. The method of any preceding clause, wherein the one or more augmented operating conditions comprises: augmenting one or more irradiation parameters based at least in part on the one or more optical anomalies, the one or more irradiation parameters comprising: beam power, spot size, scan speed, and/or power density profile.
18. The method of any preceding clause, wherein the one or more augmented operating conditions comprises: augmenting the one or more irradiation parameters based at least in part on the one or more optical anomalies when the one or more energy beams are oriented along a beam path intersected by the one or more optical anomalies.
19. An additive manufacturing system, the system comprising: an additive manufacturing machine comprising an energy beam system configured to emit one or more energy beams to additively manufacture a three-dimensional object, and one or more optical elements utilized by, or defining a portion of, the energy beam system; and a control system communicatively coupled with, or defining a portion of, the additive manufacturing machine, wherein the control system is configured to perform a method comprising: determining an operational state and/or a remedial event for the additive manufacturing machine, the operational state and/or the remedial event determined based at least in part on one or more optical anomalies having been determined upon the one or more optical elements based at least in part on image data from a light sensor, the light sensor having detected a reflected portion of an imaging beam, the imaging beam emitted by a light source and the reflected portion reflected by the one or more optical elements, wherein the operational state comprises a nominal operational state and/or an augmented operational state, and wherein the remedial event comprises a maintenance event and/or a replacement event; additively manufacturing the three-dimensional object at least in part using nominal operating conditions when the operational state comprises a nominal operational state; and additively manufacturing the three-dimensional object at least in part using one or more augmented operating conditions when the operational state comprises an augmented operational state; and/or performing a maintenance operation upon having determined the remedial event that comprises the maintenance event, the maintenance operation comprising cleaning and/or calibrating the one or more optical elements and/or one or more components of the energy beam system; and/or performing a replacement operation upon having determined the remedial event that comprises the replacement event, the replacement operation comprising replacing the one or more optical elements.
20. The additive manufacturing system of any preceding clause, wherein the system is configured to perform the method of any preceding clause.
21. A computer-readable medium comprising computer-executable instructions, which when executed by a processor associated with an additive manufacturing system, cause the additive manufacturing system to perform a method comprising: determining an operational state and/or a remedial event for an additive manufacturing machine, the operational state and/or the remedial event determined based at least in part on one or more optical anomalies having been determined upon one or more optical elements based at least in part on image data from a light sensor, the one or more optical elements utilized by, or defining a portion of, an energy beam system configured to emit one or more energy beams to additively manufacture a three-dimensional object, the light sensor having detected a reflected portion of an imaging beam, the imaging beam emitted by a light source and the reflected portion reflected by the one or more optical elements, wherein the operational state comprises a nominal operational state and/or an augmented operational state, and wherein the remedial event comprises a maintenance event and/or a replacement event; additively manufacturing the three-dimensional object at least in part using nominal operating conditions when the operational state comprises a nominal operational state; and additively manufacturing the three-dimensional object at least in part using one or more augmented operating conditions when the operational state comprises an augmented operational state; and/or performing a maintenance operation upon having determined the remedial event that comprises the maintenance event, the maintenance operation comprising cleaning and/or calibrating the one or more optical elements and/or one or more components of the energy beam system; and/or performing a replacement operation upon having determined the remedial event that comprises the replacement event, the replacement operation comprising replacing the one or more optical elements.
22. The computer-readable medium of any preceding clause, comprising computer-executable instructions, which when executed by a processor associated with an additive manufacturing system, cause the additive manufacturing system to perform the method of any preceding clause.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of operating an additive manufacturing machine, the method comprising:
determining an operational state and/or a remedial event for an additive manufacturing machine, the operational state and/or the remedial event determined based at least in part on one or more optical anomalies having been determined upon one or more optical elements based at least in part on image data from a light sensor, the one or more optical elements utilized by, or defining a portion of, an energy beam system configured to emit one or more energy beams to additively manufacture a three-dimensional object, the light sensor having detected a reflected portion of an imaging beam, the imaging beam emitted by a light source and the reflected portion reflected by the one or more optical elements, wherein the operational state comprises a nominal operational state and/or an augmented operational state, and wherein the remedial event comprises a maintenance event and/or a replacement event;
additively manufacturing the three-dimensional object at least in part using nominal operating conditions when the operational state comprises a nominal operational state; and
additively manufacturing the three-dimensional object at least in part using one or more augmented operating conditions when the operational state comprises an augmented operational state; and/or
performing a maintenance operation upon having determined the remedial event that comprises the maintenance event, the maintenance operation comprising cleaning and/or calibrating the one or more optical elements and/or one or more components of the energy beam system; and/or
performing a replacement operation upon having determined the remedial event that comprises the replacement event, the replacement operation comprising replacing the one or more optical elements.

2. The method of any preceding claim, comprising:
emitting the imaging beam from the light source and detecting the reflected portion of the imaging beam with the light sensor, the reflected portion of the imaging beam having been reflected by the one or more optical elements of the additive manufacturing machine.

3. The method of any preceding claim, comprising:
detecting the reflected portion of the imaging beam with the light sensor; and
determining the one or more optical anomalies upon the one or more optical elements of the additive manufacturing machine based at least in part on the image data from the light sensor.

4. The method of any preceding claim, comprising:
determining the one or more optical anomalies based at least in part on a degree of focus and/or defocus of the at least a portion of the imaging beam detected by the light sensor.

5. The method of any preceding claim, comprising:
determining the one or more optical anomalies based at least in part on backscatter and/or forward scatter of the at least a portion of the imaging beam detected by the light sensor.

6. The method of any preceding claim, comprising:
determining the one or more optical anomalies upon the one or more optical elements of the additive manufacturing machine based at least in part on the image data from the light sensor, wherein determining the one or more optical anomalies comprises: determining an existence, location, and/or characteristic of the one or more optical anomalies.

7. The method of any preceding claim, comprising:
determining the existence, location, and/or characteristic of the one or more optical anomalies at least in part using a Maxwell equation.

8. The method of any preceding claim, wherein the Maxwell equation comprises and/or is based at least in part on a Mie solution, a Rayleigh approximation, a Rayleigh-Gans approximation, and/or an anomalous diffraction approximation.

9. The method of any preceding claim, wherein the one or more optical anomalies comprises contaminants on the one or more optical elements, and/or wherein the one or more optical anomalies comprises damage to the one or more optical elements.

10. The method of any preceding claim, comprising:
determining the operational state and/or the remedial event for the additive manufacturing machine based at least in part on an anomalous region of the one or more optical elements, wherein the anomalous region is determined based at least in part on a size and/or quantity of the one or more optical anomalies.

11. The method of any preceding claim, comprising:
performing a maintenance operation on the first optical element upon having determined the remedial event based at least in part on the one or more optical anomalies having been determined from the first reflected portion, the maintenance operation comprising cleaning and/or calibrating the first optical element and/or one or more components of the additive manufacturing machine that utilize the first optical element; and/or
performing a maintenance operation on the second optical element upon having determined the remedial event based at least in part on the one or more optical anomalies having been determined from the second reflected portion, the maintenance operation comprising cleaning and/or calibrating the second optical element and/or one or more components of the additive manufacturing machine that utilize the second optical element.

12. The method of any preceding claim, comprising:
performing a replacement operation on the first optical element upon having determined the remedial event based at least in part on the one or more optical anomalies having been determined from the first reflected portion, the replacement operation comprising replacing the first optical element; and/or
performing a replacement operation on the second optical element upon having determined the remedial event based at least in part on the one or more optical anomalies having been determined from the second reflected portion, the replacement operation comprising replacing the second optical element.

13. The method of any preceding claim, wherein the additive manufacturing machine comprises a first irradiation device configured to irradiate a first build plane region with a first energy beam that passes through a first one or more optical elements, and a second irradiation device configured to irradiate a second build plane region with a second energy beam that passes through a second one or more optical elements, the first build plane region and the second build plane region overlapping one another at an interlace region;
wherein the one or more augmented operating conditions comprises assigning at least a first portion of the interlace region to the second irradiation device when the one or more optical anomalies comprises a first one or more optical anomalies having been determined upon the first one or more optical elements, wherein the first energy beam would intersect the first one or more optical anomalies when oriented along a first beam path directed to the at least a first portion of the interlace region assigned to the second irradiation device; and/or
wherein the one or more augmented operating conditions comprises assigning at least a second portion of the interlace region to the first irradiation device when the one or more optical anomalies comprises a second one or more optical anomalies having been determined upon the second one or more optical elements, wherein the second energy beam would intersect the second one or more optical anomalies when oriented along a second beam path directed to the at least a second portion of the interlace region assigned to the first irradiation device.

14. The method of any preceding claim, comprising:
selectively spraying the cleaning fluid in proximity to a portion of the one or more optical elements determined based at least in part on a location of the one or more optical anomalies, the location of the one or more optical anomalies determined based at least in part on the image data; and/or
selectively applying a vacuum stream in proximity to a portion of the one or more optical elements determined based at least in part on the location of the one or more optical anomalies determined based at least in part on the image data.

15. An additive manufacturing system, the system comprising:
an additive manufacturing machine comprising an energy beam system configured to emit one or more energy beams to additively manufacture a three-dimensional object, and one or more optical elements utilized by, or defining a portion of, the energy beam system; and
a control system communicatively coupled with, or defining a portion of, the additive manufacturing machine, wherein the control system is configured to perform a method comprising:
determining an operational state and/or a remedial event for the additive manufacturing machine, the operational state and/or the remedial event determined based at least in part on one or more optical anomalies having been determined upon the one or more optical elements based at least in part on image data from a light sensor, the light sensor having detected a reflected portion of an imaging beam, the imaging beam emitted by a light source and the reflected portion reflected by the one or more optical elements, wherein the operational state comprises a nominal operational state and/or an augmented operational state, and wherein the remedial event comprises a maintenance event and/or a replacement event;
additively manufacturing the three-dimensional object at least in part using nominal operating conditions when the operational state comprises a nominal operational state; and
additively manufacturing the three-dimensional object at least in part using one or more augmented operating conditions when the operational state comprises an augmented operational state; and/or
performing a maintenance operation upon having determined the remedial event that comprises the maintenance event, the maintenance operation comprising cleaning and/or calibrating the one or more optical elements and/or one or more components of the energy beam system; and/or
performing a replacement operation upon having determined the remedial event that comprises the replacement event, the replacement operation comprising replacing the one or more optical elements.
